# EUROPÄISCHE PATENTSCHRIFT

(11) **EP 3 707 867 B1**
(45) Veröffentlichungstag und Bekanntmachung des Hinweises auf die Patenterteilung: **26.01.2022**
(21) Anmeldenummer: 18799738.2
(22) Anmeldetag: 06.11.2018
(51) Int. Cl.: H04B 1/10

(54) **VERFAHREN UND VORRICHTUNG ZUR BESTIMMUNG DER MODULATIONSART EINES SIGNALS UND KONFIGURATION EINER VERSTÄRKUNGSEINHEIT**
METHOD AND DEVICE FOR DETERMINING THE MODULATION TYPE OF A SIGNAL, AND CONFIGURATION OF AN AMPLIFICATION UNIT
PROCÉDÉ ET DISPOSITIF DE DÉTERMINATION DU TYPE DE MODULATION D'UN SIGNAL ET DE CONFIGURATION D'UNE UNITÉ D'AMPLIFICATION

(30) Priorität: 06.11.2017 DE 102017219691
(43) Veröffentlichungstag der Anmeldung: 16.09.2020
(73) Patentinhaber: Molex CVS Dabendorf GmbH, 15806 Zossen (DE)
(72) Erfinder: LEHMANN, Lars, 15745 Wildau (DE); KAUTGE, Helmut, 14532 Stahnsdorf (DE); WEIGELT, Marcus, 15806 Zossen (DE)
(74) Vertreter: Bardehle Pagenberg Partnerschaft mbB Patentanwälte Rechtsanwälte
(86) Internationale Anmeldenummer: PCT/EP2018/080309
(87) Internationale Veröffentlichungsnummer: WO 2019/086704

(56) Entgegenhaltungen:
- EP-A2- 1 841 083
- EP-A2- 2 755 329
- WO-A1-01/03397
- WO-A2-2009/155134
- US-A- 5 802 114

## Beschreibung

### Hintergrund

Die Erfindung betrifft ein Verfahren zum Einstellen eines Verstärkersystems in Abhängigkeit der verwendeten Modulationsart sowie zum Bestimmen einer Modulationsart eines Signals. Ebenso betrifft die Erfindung eine Schaltungsanordnung zum Ausführen derartiger Verfahren.

In den Fällen, in denen ein Signal durch eine Schaltungsanordnung weiterverarbeitet werden soll, kann es für die Weiterverarbeitung erforderlich sein, dass die Modulationsart des Signals bekannt ist. In der Regel verfügt die Schaltungsanordnung, die das Signal weiterverarbeiten soll, über Informationen bezüglich der Modulationsart, anhand welcher das zu bearbeitende Signal moduliert wurde. In einigen Fällen jedoch hat die Schaltungsanordnung keine oder nur unzureichende Informationen über die Modulationsart des Signals. In diesem Fall kann die Schaltungsanordnung modulationsartspezifische Parameter oder Eigenschaften bei der Weiterbearbeitung des Signals nicht berücksichtigen. Dies kann zu einer nicht spezifikationsgerechten Bearbeitung des Signals führen, was die Signaldemodulation behindern kann und/oder zu nicht erlaubten Störaussendungen führt.

Schaltungsanordnungen, die keine oder nur unzureichende Informationen über die Modulationsart haben, diese jedoch für eine optimale Weiterverarbeitung benötigen würden, können beispielsweise Schaltungsanordnungen sein, die ausgestaltet sind, um Signale zwischen einem Endgerät und einer Antenne zu verstärken.

Solche Schaltungsanordnungen werden beispielsweise bei Kraftfahrzeugen eingesetzt, um ein Signal eines sich im Inneren des Kraftfahrzeugs befindenden Mobiltelefons zu einer externen Kraftfahrzeugantenne hin zu verstärken und somit den Empfang des Mobiltelefons zu verbessern. Bei einem solchen beispielhaften Szenario kann das Mobiltelefon mit Hilfe der Schaltungsanordnung und einer Hochfrequenzleitung mit einer externen Antenne des Kraftfahrzeugs verbunden sein. In der Regel wird die Verstärkung der Schaltungsanordnung dazu eingesetzt, die Dämpfung der Signalübertragung zwischen dem Mobiltelefon und der externen Antenne des Kraftfahrzeugs zu kompensieren.

Diese Schaltungsanordnungen unterstützen verschiedene Kommunikationsstandards moderner Mobiltelefone, wie beispielsweise Global System for Mobile Communications (GSM), Universal Mobile Telecommunications System (UMTS), Long Term Evolution (LTE) usw., die unterschiedliche Übertragungsverfahren und unterschiedliche Frequenzbereiche verwenden, sowie Standards für lokale Drahtlosnetze.

Derartige bekannte Schaltungsanordnungen konfigurieren ihre Verstärkungseinheit, die einen oder mehrere Verstärker aufweisen kann, in Abhängigkeit eines detektierten Frequenzbereichs und/oder eines zeitlichen Signalverlaufs. Beim Konfigurieren der Verstärkungseinheit muss jedoch sichergestellt werden, dass die verstärkten Signale weiterhin die Vorgaben eines verwendeten Kommunikationsstandards einhalten. Solche Vorgaben betreffen beispielsweise Linearitätsparameter oder maximal zulässige Ausgangsleistungen des Mobilfunksignals, die sich in demselben Kommunikationsstandard in Abhängigkeit der verwendeten Modulation unterscheiden können.

Ein Beispiel für einen Kommunikationsstandard, der für die unterstützten Modulationsarten spezifische maximale Ausgangsleistungen und Linearitätsparameter aufweist, ist der GSM/EDGE-Standard (EDGE = Enhanced Data Rates for GSM Evolution), der die Modulationen "Gaussian Minimum Shift Keying" (GMSK) und "8-Phase-Shift Keying" (8-PSK) unterstützt.

Die entsprechenden Grenzwerte zu den unterschiedlichen Modulationsarten sind beispielsweise in ETSI TS 151 010-1 v.12.5.0 spezifiziert.

Als weiteres Beispiel sei der Kommunikationsstandard LTE (Long Term Evolution) genannt, der in Abhängigkeit der aktuell spezifizierten Sendesignalmodulation (QPSK, 16QAM, 64OAM, 265QAM) sehr unterschiedliche Anforderungen an die Linearität des signalverarbeitenden Systems vorgibt. Beispielsweise seien die modulationsabhängigen EVM-Linearitätsanforderungen (EVM = Error Vector Magnitude) genannt, die in ETSI TS 136 101 v14.3.0 aufgeführt werden.

Um mit den bekannten Verstärkungssystemen möglichst viele Kommunikationsstandards und/oder Modulationsarten unterstützen zu können, müssen die spezifizierten maximalen Ausgangsleistungen sowie die Linearitätsparameter immer eingehalten werden, was zur Folge hat, dass die Verstärkereinheit in den Schaltungsanordnungen der oben genannten Art immer für die höchste geforderte Linearität und die minimal zulässige Ausgangsleistung eingestellt sein muss.

Das hat jedoch zur Folge, dass zum einen die maximale Ausgangsleistung nicht für alle Modulationsarten ausgenutzt werden kann und zum anderen die Effizienz des Verstärkersystems herabgesetzt wird.

Der Erfindung liegt demnach die Aufgabe zugrunde, eine Schaltungsanordnung und ein entsprechendes Verfahren bereitzustellen, die die oben genannten Nachteile beseitigen. Es sollen somit eine Schaltungsanordnung und ein entsprechendes Verfahren zum Bestimmen der Modulationsart eines Signals bereitgestellt werden, ohne dass es erforderlich ist, das Signal zu demodulieren. Insbesondere sollen eine Schaltungsanordnung und ein entsprechendes Verfahren zum Einstellen der Verstärkereinheit der Schaltungsanordnung in Abhängigkeit der Modulationsart eines Signals bereitgestellt werden, ohne dass es erforderlich ist, das Signal zu demodulieren.

Die Druckschrift EP 2 755 329 A2 offenbart eine Kompensationsverstärkungsschaltung, die zum Einbau in eine Übertragungsleitung zwischen einem in einem Kraftfahrzeug befindlichen Mobilfunkgerät bzw. einer kraftfahrzeugseitigen Aufnahme für das Mobilfunkgerät einerseits und einer Antenne des Kraftfahrzeugs andererseits vorgesehen ist. Die Kompensationsverstärkungsschaltung hat eine Empfangsverstärkungsvorrichtung, mittels der ein über die Antenne des Kraftfahrzeugs empfangenes und durch die Übertragungsleitung dem Mobilfunkgerät zuzuführendes Empfangssignal verstärkbar ist, eine Sendeverstärkungsvorrichtung, mittels der ein vom Mobilfunkgerät abgesendetes und durch die Übertragungsleitung der Antenne des Kraftfahrzeugs zuzuführendes Sendesignal verstärkbar ist, eine Detektorvorrichtung, mittels der ein Betriebszustand des im Kraftfahrzeug befindlichen Mobilfunkgeräts detektier- und zu einem Detektorsignal verarbeitbar ist, eine Selektionsvorrichtung, mittels der der Betriebszustand der Kompensationsverstärkungsschaltung an den Betriebszustand des im Kraftfahrzeug befindlichen Mobilfunkgeräts anpassbar ist, und eine Auswertevorrichtung, mittels der das Detektorsignal erfassbar und mittels der die Selektionsvorrichtung in Abhängigkeit vom Detektorsignal beeinflussbar ist. Um eine Kompensationsverstärkungsschaltung zu schaffen, mittels der ohne großen technischkonstruktiven Aufwand eine Vielzahl von Frequenzbändern unterstützt werden kann, wird in der Druckschrift vorgeschlagen, dass die Selektionsvorrichtung Filter mit einer anpassbaren Übertragungscharakteristiken aufweist und dass die Übertragungscharakteristiken der Filter mittels der Auswertevorrichtung entsprechend dem Detektorsignal einstellbar sind.

Die Druckschrift WO 01/03397 A1 offenbart ein Kommunikationssystem, das einen Sender und einen Empfänger umfasst, wobei der Empfänger mit dem Sender synchronisiert ist und eine Modulationsart in einem vom Sender gesendeten und vom Empfänger empfangenen Signal erkannt wird. Ein erster Teil des empfangenen Signals wird mit einem oder mehreren Signalen korreliert, die Modulationsarten repräsentieren, die vom Kommunikationssystem verwendet werden, um die Art der verwendeten Modulation zu erkennen. Zwischen dem Sender und dem Empfänger wird eine Synchronisation hergestellt. Der erste Teil kann mit jedem von einem oder mehreren verschiedenen Signalen korreliert werden, die verschiedene Modulationsarten repräsentieren, die im Kommunikationssystem verwendet werden, um die Art der verwendeten Modulation zu erkennen. Abwechselnd kann der erste Teil des empfangenen Signals um verschiedene Beträge derotiert werden, um eine Vielzahl von derotierten Signalen zu erzeugen, die mit dem Signal korreliert sind, das die vom Kommunikationssystem verwendete Modulation darstellt, um die Art der verwendeten Modulation zu erkennen. Wenn die Korrelation nicht zu einer Bestimmung des Modulationstyps führt, wird entweder ein vorbestimmter Modulationstyp ausgewählt oder die Entscheidung über den Modulationstyp wird zu einem späteren Zeitpunkt getroffen, z.B. auf der Grundlage eines Vergleichs der Signalqualitäten oder der Entzerrungsergebnisse.

### Zusammenfassung

Die Aufgabe wird durch das Verfahren sowie die Schaltungsanordnung der unabhängigen Ansprüche gelöst. Vorteilhafte Ausführungsformen werden in den Unteransprüchen beansprucht.

Das erfindungsgemäße Verfahren zum Bestimmen einer Modulationsart eines Signals mithilfe einer Schaltungsanordnung umfasst ein Empfangen eines Signals an der Schaltungsanordnung, ein Erfassen einer Leistung des Signals mit N Messwerten in einem Messfenster sowie ein Bestimmen einer Modulationsart des Signals aus einer Vielzahl von Modulationsarten basierend auf der erfassten Leistung und einem oder mehreren Referenzwerten oder Referenzmustern, das Konfigurieren der Verstärkungseinheit basierend auf der bestimmten Modulationsart und das Verstärken des Signals zwischen einem Endgerät und einer Antenne mit der Verstärkungseinheit.

Dieses erfindungsgemäße Verfahren ermöglicht somit eine einfache Bestimmung einer Modulationsart eines empfangenen Signals anhand seiner Leistung. Insbesondere dient hierfür das erkannte Leistungszeitverhalten des Signals, bzw. die erkannte Leistung, zu unterschiedlichen, kurz hintereinanderliegenden Zeitpunkten. Dies kann für eine effiziente nachfolgende Bearbeitung des Signals von erheblicher Bedeutung sein. Beispielsweise können so modulationsartspezifische Parameter bei der nachfolgenden Bearbeitung berücksichtigt werden.

Die erfindungsgemäße Schaltungsanordnung zum Bestimmen einer Modulationsart eines Signals umfasst eine Übertragungseinheit, die eingerichtet ist, ein Signal zu empfangen, einen Leistungsdetektor , der eingerichtet ist, eine Leistung des Signals mit N Messwerten in einem Messfenster zu erfassen, eine Verstärkungseinheit, aufweisend einen order mehrere Verstärker, angeordnet in parallelen Signalzweigen, die eingerichtet ist, das Signal zwischen einem Endgerät und einer Antenne zu verstärken und eine Steuereinheit, die eingerichtet ist, eine Modulationsart des Signals aus einer Vielzahl von Modulationsarten basierend auf der erfassten Leistung und einem oder mehreren Referenzwerten oder Referenzmustern zu bestimmen und die Verstärkungseinheit basierend auf der bestimmten Modulationsart zu konfigurieren.

In jeder der vorgenannten erfindungsgemäßen Ausgestaltungen wird das Signal über eine Funkschnittstelle empfangen. Hierfür kann die Schaltungsanordnung über eine Signalkopplungseinrichtung, also eine Übertragungseinheit, verfügen, die drahtlose Funksendesignale entgegennimmt und zur weiteren Verarbeitung in eine Hochfrequenzleitung einkoppelt und/oder Empfangssignale zur drahtlosen Übertragung auskoppelt. Der Verzicht auf eine kabelgebundene Verbindung zwischen einer Sendevorrichtung, die das Signal absendet und der Schaltungsanordnung ermöglicht eine Vielzahl von Endgeräten ohne eine einheitliche Kabelschnittstelle zu unterstützten, wie auch eine größere räumliche Flexibilität und zusätzlichen Komfort. Alternativ kann eine Sendevorrichtung auch über ein Kabel mit der Schaltungsanordnung verbunden werden, welches Störungen, die bei einer Funkverbindung auftreten, vermeidet.

Vorzugsweise sind die N Messwerte aufeinanderfolgend abgetastete Werte des Signals. Für eine zuverlässige Bestimmung der Modulationsart ist es erforderlich, dass die N Messwerte aufeinanderfolgend abgetastete Werte des Signals sind. Demnach ist es beispielsweise nicht möglich vorher erfasste Messwerte, die zu einem anderen Signal gehören für die Bestimmung der Modulationsart zu berücksichtigen.

Vorzugsweise erfolgt das Erfassen der Leistung des Signals mit N Messwerten in einem Messfenster dadurch, dass das Signal in dem Messfenster abgetastet wird.

Die Anzahl der N Messwerte ist an die zu detektierende Modulationsart anzupassen. Beispielsweise kann die Anzahl N der Messwerte mehr als 10 Messwerte, vorzugsweise mehr als 20 Messwerte betragen. Auch kann die Anzahl N der Messwerte weniger als 100 Messwerte, vorzugsweise weniger als 50 Messwerte beinhalten. In einer bevorzugten Ausführungsform kann die Anzahl N 32 Messwerten entsprechen.

Auch ist die Dauer des Messfensters an die zu detektierende Modulationsart anzupassen. Vorzugsweise ist das Messfenster länger als die Dauer eines modulierten Symbols des Signals. Dies kann erforderlich sein, um die Modulationsart sicher bestimmen zu können.

Eine beispielhafte Dauer eines Messfensters kann mehr als 50 µs, vorzugsweise mehr als 90 µs betragen. Ferner kann die Dauer beispielsweise weniger als 200 µs, vorzugsweise weniger als 110 µs betragen. In einer bevorzugten Ausführungsform kann das Messfenster eine Dauer von 100 µs aufweisen.

Insbesondere umfasst das Bestimmen der Modulationsart bzw. das Konfigurieren der Verstärkereinheit ein Vergleichen eines Amplitudenzeitverlaufs des Signals mit einem Referenzmuster. Damit kann die zu detektierende Modulationsart schnell und zuverlässig erkannt werden, bzw. die Verstärkereinheit entsprechend konfiguriert werden.

In einer alternativen Ausgestaltung kann auf einen Vergleich mit dem Referenzmuster verzichtet werden. In dieser Ausgestaltung kann das Bestimmen der Modulationsart bzw. das Konfigurieren der Verstärkereinheit ein Ermitteln eines ersten Leistungswerts und eines zweiten Leistungswerts, wobei der erste und der zweite Leistungswert jeweils ein unterschiedlicher aus einem maximalen Leistungswert Nₘₐₓ, einem minimalen Leistungswert Nₘᵢₙ und einem Leistungsmittelwert aus den N Messwerten ist, umfassen, sowie ein Errechnen eines Vergleichsparameters aus dem ersten und dem zweiten Leistungswert, und ein Vergleichen des Vergleichsparameters mit einem oder mehreren Schwellwerten. Es hat sich gezeigt, dass sich dieses Verfahren schaltungstechnisch sehr einfach umsetzen lässt, und zu zuverlässigen Ergebnissen führt.

Vorzugsweise umfasst der Vergleichsparameter aus dem ersten und dem zweiten Leistungswert eine Differenz oder einen Quotienten aus dem ersten und dem zweiten Leistungswert.

Auch umfasst der Vergleich mit dem einen oder den mehreren Schwellwerten vorzugsweise einen Vergleich mit einem unteren Schwellwert und mit einem oberen Schwellwert. Somit kann ermittelt werden, ob die errechnete Differenz, innerhalb eines von dem unteren Schwellwert und im oberen Schwellwert aufgespannt Schwellwertbereichs liegt.

Vorzugsweise weist jede aus der Vielzahl von Modulationsarten einen vorbestimmten unteren und einen vorbestimmten oberen Schwellwert auf. Die Modulationsart des Signals kann dann dadurch bestimmt werden, dass der Vergleichsparameter größer oder gleich dem vorbestimmten unteren und kleiner oder gleich dem vorbestimmten oberen Schwellwert der Modulationsart ist. Dabei kann der Vergleichsparameter mit den Schwellwerten der unterschiedlichen Modulationsarten nacheinander verglichen werden. Falls der Vergleichsparameter in den von dem unteren Schwellwert und dem oberen Schwellwert aufgespannten Schwellwertbereich einer spezifischen Modulationsart fällt, kann bestimmt werden, dass das Signal in dieser Modulationsart vorliegt bzw. eine entsprechende Konfiguration der Verstärkungseinheit vorgenommen werden. Beim Vergleich der errechneten Differenz mit dem Schwellwertbereich können die jeweiligen Schwellwertgrenzen in den Schwellwertbereich eingeschlossen oder von diesem ausgeschlossen sein.

In dem Fall, in dem nur zwei verschiedene Modulationsarten zu unterscheiden sind, kann ein einziger Schwellwert zur Bestimmung ausreichen. Die Modulationsart wird demnach dadurch bestimmt, bzw. die Konfiguration der Verstärkungseinheit darauf basieren vorgenommen, dass wenn der Vergleichsparameter über ggf. unter dem Schwellwert liegt, die erste Modulationsart ausgewählt wird und ansonsten die zweite Modulationsart ausgewählt wird.

Vorzugsweise umfasst die Vielzahl von Modulationsarten Modulationsarten, die Frequenzmodulation und Amplitudenmodulation beinhalten. Insbesondere kann die Vielzahl von Modulationsarten Gaussian Minimum Shift Keying (GMSK), 8-Phase-Shift Keying (8-PSK), 16-Quadrature Amplitude Modulation (16-QAM) oder 32-Quadrature Amplitude Modulation (32-QAM) beinhalten.

Vorzugsweise können durch das erfindungsgemäße Verfahren frequenzmodulierte Signale zuverlässig von amplitudenmodulierten und/oder phasenmodulierten Signalen durch Schwellwertvergleich unterschieden werden.

Gilt es nur GMSK von 8-PSK zu unterscheiden, kann ein einziger Schwellwert verwendet werden. Ist der Vergleichsparameter über dem Schwellwert, handelt es sich um 8-PSK andernfalls handelt es sich um GMSK. Ein beispielhafter Schwellwert könnte in dem Fall zwischen 0,5 und 1 dB liegen.

Es soll hier angemerkt werden, dass die oben genannten Schwellwerte in der Einheit dB auch abhängig von dem verwendeten Leistungsdetektor und/oder verwendeter Schaltungskomponenten sein können.

In jeder der vorgenannten Ausgestaltungen kann es bevorzugt sein, weiterhin den Frequenzbereich und/oder den Zeitverlauf des Signals zu bestimmen und ein Bestimmen der Vielzahl von Modulationsarten basierend auf dem bestimmten Frequenzbereich und/oder Zeitverlauf des Signals vorzunehmen. Damit kann, vorzugsweise vorab und/oder parallel, die Anzahl der zu unterscheidenden Modulationsarten begrenzt werden, z.B. wenn an Hand des Frequenzbereichs erkannt werden kann, dass nur ein bestimmter Kommunikationsstandard vorliegt, welcher z.B. nur zwei unterschiedliche Modulationsarten zulässt.

Vorzugsweise umfasst die Schaltungsanordnung eine Verstärkungseinheit, die einen oder mehrere Verstärker angeordnet in parallelen Signalzweigen aufweist. Das erfindungsgemäße Verfahren umfasst vorzugsweise weiterhin eine Verstärkung des Signals zwischen einem Endgerät und einer Antenne.

Das Konfigurieren der Verstärkungseinheit kann auf unterschiedliche Weisen erfolgen. Vorzugsweise umfasst das Konfigurieren der Verstärkungseinheit ein Konfigurieren des einen oder der mehreren Verstärker und/oder ein Konfigurieren der Signalführung in der Verstärkungseinheit und/oder ein Konfigurieren einer Dämpfungseinrichtung. Beim Konfigurieren des einen oder der mehreren Verstärker werden Einstellungen des einen oder der mehreren Verstärker selbst angepasst.

Das Konfigurieren der Verstärkungseinheit umfasst vorzugsweise ein Konfigurieren des einen oder der mehreren Verstärker basierend auf dem Vergleichsparameter. Dies ermöglicht es, den einen oder die mehreren Verstärker an die maximale Leistungsdifferenz des zu verstärkenden Signals anzupassen und somit einen Betrieb im linearen Bereich des Verstärkers sicherzustellen.

Vorzugsweise erfolgt die Ermittlung der zu verarbeitenden Messwerte, wie z.B. des maximalen Werts Nₘₐₓ und des minimalen Werts Nₘᵢₙ aus den N Messwerten, die erforderlichen Berechnungen, wie z.B. das Errechnen der Differenz von Nₘₐₓ zu Nₘᵢₙ, und die vorzunehmende Bestimmung basierend auf der bestimmten Modulationsart bzw. Konfiguration der Verstärkereinheit, wie z.B. das Vergleichen der errechneten Differenz mit einem oder mehreren Schwellwerten, durch eine Steuereinheit. Die Steuereinheit umfasst vorzugsweise einen Analog-Digital-Umsetzer (ADC) und einen Mikrocontroller bzw. eine Complex Programmable Logic Device (CPLD). Denkbar ist auch, dass der Analog-Digital-Umsetzer im Mikrokontroller integriert ist.

Eine Anordnung des Leistungsdetektors vor dem einen oder den mehreren Verstärkern in der Schaltungsanordnung hat den Vorteil, dass die Modulationsart bestimmt werden kann bevor das Signal durch die Verstärkungseinheit verstärkt wird. Demnach kann die Verstärkungseinheit vor der Verstärkung basierend auf der bestimmten Modulationsart konfiguriert werden. Dies setzt jedoch eine höhere Empfindlichkeit der Detektionseinheit voraus, da das zu analysierende Signal noch nicht verstärkt wurde. Eine Anordnung des Leistungsdetektors nach dem einen oder den mehreren Verstärkern in der Schaltungsanordnung hat den Vorteil, dass die Auswertung auf einem verstärkten Signal stattfinden kann und deshalb die Detektionseinheit weniger empfindlich sein muss. Jedoch müssen hier eventuelle Verzerrungen, die Aufgrund der Verstärkung auftreten, berücksichtigt werden. Da das Signal verstärkt wird, bevor die Modulationsart bestimmt ist, hat diese Anordnung aber den Nachteil, dass solange mit Standardwerten (Defaultwerten) verstärkt werden muss, bis die Modulationsart bestimmt wurde.

Diese Anordnung hat jedoch zusätzlich den Vorteil, dass mithilfe der Detektionseinheit auch die Ausgangsleistung nach der Verstärkung gemessen und überprüft werden kann. Damit kann beispielsweise ein Einhalten der durch einen Kommunikationsstandard geforderten maximalen Ausgangsleistung kontrolliert werden.

Vorzugsweise ist die Schaltungsanordnung ausgestaltet, um gleichzeitig die Modulationsart bestimmen und Übertragungssignale verstärken zu können. Dies wird durch Aufteilen des Signals in zumindest einen ersten Signalteil und einen zweiten Signalteil erreicht, wobei der erste Signalteil an den Leistungsdetektor und der zweite Signalteil an die Verstärkungseinheit geleitet wird.

Die Aufteilung in einen ersten Signalteil und einen zweiten Signalteil kann durch Auskoppeln eines ersten Signalteils mithilfe einer Koppeleinheit erfolgen. Die Koppeleinheit kann einen oder mehrere Richtkoppler oder Splitter beinhalten. Vorzugsweise wird das Signal mittels eines Hochfrequenzfilters gefiltert bevor es dem Leistungsdetektor zugeführt wird. Dies hat den Vorteil, dass störende Elemente vor der Auswertung der Leistung durch den Leistungsdetektor herausgefiltert werden können. Auch können diese Filter dazu verwendet werden, um nur das Sende- bzw. das Empfangssignal an den Leistungsdetektor durchzulassen. Dies kann bei Sende- und Empfangssignalen, die in unterschiedlichen Frequenzbereichen übertragen werden, beispielsweise durch einen oder mehrere Bandpassfilter erfolgen.

Vorzugsweise umfasst das Verfahren weiterhin ein Ermitteln einer mittleren Leistung des Signals, insbesondere das Ermitteln einer effektiven Leistung des Signals, sowie ein Anpassen der einen oder der mehreren Referenzwerte oder Referenzmuster basierend auf der ermittelten mittleren Leistung des Signals. Die Anpassung des einen oder der mehreren Referenzwerte oder Referenzmuster ermöglicht eine genauere Bestimmung der Modulationsart. Die Anpassung kann zum einen deshalb erforderlich sein, weil der Leistungsdetektor, je nach Ausführungsform, eine Tiefpasswirkung am Ausgang hat. Durch die Tiefpasswirkung werden die maximalen und minimalen Werte Nₘₐₓ und Nₘᵢₙ mit zunehmender Tiefpasswirkung gemittelt und somit die Differenz von Nₘₐₓ und Nₘᵢₙ verringert. Zum anderen kann die Anpassung erforderlich sein, wenn der Leistungsdetektor nach dem einen oder den mehreren Verstärkern angeordnet ist und der eine oder die mehreren Verstärker das zu verstärkende Signal übersteuern. Dies hat nämlich zur Folge, dass sich die Differenz der Werte Nₘₐₓ zu Nₘᵢₙ verringert.

Vorzugsweise umfasst das Verfahren weiterhin ein Ermitteln einer Dauer des Signals, ein Konfigurieren der Verstärkungseinheit basierend auf der ermittelten Dauer des Signals sowie ein Reduzieren der durch den einen oder den mehreren Verstärkern erzeugten Signalverstärkung, wenn das Signal länger als eine vorbestimmte Zeitspanne ist. Wenn das Signal mit Hilfe einer zeitschlitzbasieren Übertragungsart gesendet wird, entspricht die vorbestimmte Zeitspanne vorzugsweise zwei oder mehr aufeinanderfolgenden Sendezeitschlitzen. Die Reduzierung der Leistung bei länger andauernden Signalen ermöglicht die Verstärker vor thermischer Überlastung zu schützen. Eine solche Leistungsreduzierung kommt auch in verschiedenen Mobilfunkstandards vor, siehe beispielsweise ETSI TS 151 010-1 v.12.5.0. Die Schaltungsanordnung ist somit in der Lage das Verhalten verschiedener Mobilfunkstandards teilweise nachzubilden und sich somit an diese anzupassen.

Ein erfindungsgemäßes Verfahren zur Verstärkung von Signalen zwischen einem Endgerät und einer Antenne mithilfe einer Schaltungsanordnung, wobei die Schaltungsanordnung eine Verstärkungseinheit umfasst, aufweisend einen oder mehrere Verstärker angeordnet in parallelen Signalzweigen, umfasst ein Empfangen eines Signals an der Schaltungsanordnung, ein Ermitteln einer Dauer des Signals, ein Konfigurieren der Verstärkungseinheit basierend auf der ermittelten Dauer des Signals. Das Verfahren kann ferner ein Reduzieren der durch den einen oder den mehreren Verstärkern erzeugten Signalverstärkung, wenn das Signal länger als eine vorbestimmte Zeitspanne ist, umfassen. Wenn das Signal mit Hilfe einer zeitschlitzbasieren Übertragungsart gesendet wird, entspricht die vorbestimmte Zeitspanne vorzugsweise zwei oder mehr aufeinanderfolgenden Sendezeitschlitzen.

Das Verfahren ermöglicht die Verstärkungseinheit basierend auf der Dauer eines Sendesignals zu konfigurieren. Wie bereits oben erwähnt, kann dies bei lang andauernden Signalen von Vorteil sein, da eine thermische Überlastung von Verstärkern und ggf. anderen Bauteilen vermieden werden kann.

Eine erfindungsgemäße Schaltungsanordnung weist Mittel auf, die dazu ausgelegt sind, eines der oben erwähnten Verfahren auszuführen.

In der nachfolgenden Beschreibung wird, zur Vereinfachung, üblicherweise von der Bestimmung einer Modulationsart des Signals aus einer Vielzahl von Modulationsarten gesprochen. Dies ist nicht nur dahingehend zu verstehen, dass eine Modulationsart eindeutig festgelegt oder auslesbar hinterlegt wird. Es ist hiermit auch gemeint, dass basierend auf den erkannten (Modulations-)Eigenschaften des Signals, d.h. der erfassten Leistung im Hinblick auf den einem oder mehreren Referenzwerten oder Referenzmustern, Einheiten einer Schaltungsanordnung konfiguriert werden, wie voranstehend bereits ausgeführt, d.h. z.B. Arbeitspunkte der Verstärker einer Verstärkungsschaltung konfiguriert werden.

### Zeichnungen

Weitere Beispiele und Ausführungsformen werden im Folgenden anhand der Zeichnung beschrieben, bei der:
- Fig. 1: ein Verfahren zum Bestimmen einer Modulationsart eines Signals bzw. der Konfiguration einer Verstärkungseinheit mithilfe einer Schaltungsanordnung zeigt,
- Fig. 2: eine Schaltungsanordnung, die eine Anpassung einer Verstärkungseinheit basierend auf einer ermittelten Modulationsart ermöglicht, gemäß einer Ausführungsform der Erfindung zeigt,
- Fig. 3: eine Schaltungsanordnung, die eine Anpassung einer Verstärkungseinheit basierend auf einer ermittelten Modulationsart ermöglicht, gemäß einer anderen Ausführungsform der Erfindung zeigt,
- Fig. 4: eine Leistung eines mittels 8-PSK modulierten Signals als Ausgabe eines Leistungsdetektors zeigt,
- Fig. 5: eine Leistung eines mittels GMSK modulierten Signals als Ausgabe eines Leistungsdetektors zeigt,
- Fig. 6: weitere Verfahrensschritte eines Verfahrens zur Verstärkung von Signalen zwischen einem Endgerät und einer Antenne mithilfe einer Schaltungsanordnung gemäß einer Ausführungsform der Erfindung, wobei die Verstärkung basierend auf einer Dauer eines Signals angepasst wird, zeigt,
- Fig. 7: eine Leistung eines mittels QAM (QAM16 oder QAM32) modulierten Signals als Ausgabe eines Leistungsdetektors zeigt.

### Detaillierte Beschreibung

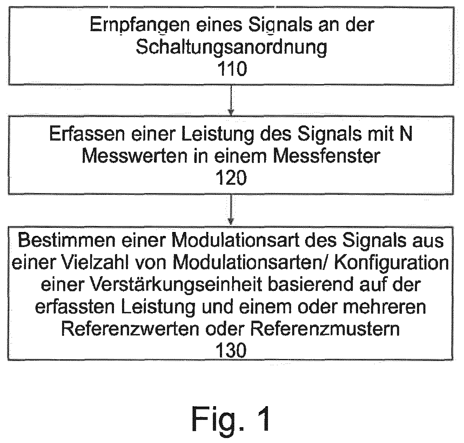

**Fig. 1** zeigt ein Verfahren zum Bestimmen einer Modulationsart eines Signals Signals bzw. der Konfiguration einer Verstärkungseinheit mithilfe einer Schaltungsanordnung. Beispiele einer zu bestimmenden Modulationsart umfassen GMSK, 8-PSK oder 16-QAM.

Bei Schritt 110 empfängt die Schaltungsanordnung ein Signal. Dieses kann entweder über ein Kabel oder eine Funkschnittstelle an der Schaltungsanordnung empfangen werden. Bei Verwendung der Funkschnittstelle kann die Schaltungsanordnung über eine Übertragungseinheit verfügen, die drahtlose Funksendesignale entgegennimmt und zur weiteren Verarbeitung in eine Hochfrequenzleitung einkoppelt und/oder Empfangssignale zur drahtlosen Übertragung auskoppelt. Der Verzicht auf eine kabelgebundene Verbindung zwischen einer Sendevorrichtung, die das Signal absendet, und der Schaltungsanordnung ermöglicht eine Vielzahl von Endgeräten ohne eine einheitliche Kabelschnittstelle zu unterstützten, wie auch eine größere räumliche Flexibilität und zusätzlichen Komfort. Bei Verwendung eines Kabels können Störungen, die bei einer Funkverbindung auftreten, vermieden werden.

Bei Schritt 120 wird eine Leistung des Signals mit N Messwerten in einem Messfenster erfasst. Für die Erfassung der N Messwerte wird das Signal aufeinanderfolgend N mal abgetastet. Um die Modulationsart zuverlässig bestimmen zu können, kann es erforderlich sein, dass alle N Werte zu demselben Signal gehören. Demnach ist es beispielsweise nicht möglich, vorher erfasste Messwerte, die zu einem anderen Signal gehören können, für die Bestimmung der Modulationsart zu berücksichtigen. Je nachdem welcher Kommunikationsstandard verwendet wird und damit welche Modulationsarten voneinander zu unterscheiden sind, kann die Anzahl der Messwerte angepasst werden. Beispielsweise kann die Anzahl N der Messwerte mehr als 10 Messwerte, vorzugsweise mehr als 20 Messwerte betragen. Ferner kann die Anzahl N der Messwerte weniger als 100 Messwerte, vorzugsweise weniger als 50 Messwerte betragen. In einer bevorzugten Ausführungsform kann die Anzahl N 32 Messwerten entsprechen.

Die Messwerte sind vorzugsweise gleichmäßig in dem Messfenster verteilt. Verschiedene Modulationsarten können jedoch eine andere Anordnung der Messwerte in dem Messfenster erforderlich machen. Somit ist die Anordnung ggf. an das abzutastende Signal anzupassen.

Zudem kann es erforderlich sein, die Dauer des Messfensters an die zu detektierende Modulationsart anzupassen. Das Messfenster soll vorzugsweise länger als die Dauer eines modulierten Symbols des Signals sein, um die Modulationsart sicher bestimmen zu können. In der Regel muss mindestens ein vollständiges Symbol für eine zuverlässige Bestimmung vorliegen. Das Messfenster darf jedoch auch nicht zu groß gewählt werden, da es ansonsten über das Signal hinausgehen könnte, also länger ist als das Signal selbst. Dann könnten einige der N Messwerte bei Abwesenheit des Sendesignals aufgenommen werden, was zu falschen Ergebnissen führen könnte. Eine beispielhafte Dauer eines Messfensters kann mehr als 50 µs, vorzugsweise mehr als 90 µs betragen. Ferner kann die Dauer beispielsweise weniger als 200 µs, vorzugsweise weniger als 110 µs betragen. In einer bevorzugten Ausführungsform kann das Messfenster eine Dauer von 100 µs aufweisen. In anderen Ausführungsformen sind auch längere Messfenster denkbar, z.B. ein Messfenster, das eine Dauer über 5 ms aufweist, und vorzugsweise geringer als 15 ms ist, beispielsweise 10 ms.

Kommt bei der Übertragung des Signals ein zeitschlitzbasiertes Übertragungsverfahren, wie beispielsweise GSM oder LTE-TDD, zum Einsatz ist das Messfenster vorzugsweise an eine Dauer eines Sendezeitschlitzes anzupassen. Insbesondere ist das Messfenster vorzugsweise kürzer oder gleich einer Dauer eines Sendezeitschlitzes, um eine zuverlässige Bestimmung der Modulationsart zu ermöglichen. Diese zuverlässige Bestimmung der Modulationsart ist in der Regel nur möglich, wenn das Messfenster nicht über einen Sendezeitschlitz hinausgeht, denn in einem solchen Fall, könnten einige der N Messwerte bei Abwesenheit eines Signals erfasst werden, was zur falschen Ergebnissen bei der weiteren Ermittlung führen kann.

Auch ist vorzugsweise der Zeitpunkt des Beginns des Messfensters je nach Modulationsart und/oder Übertragungsart festzulegen. Beispielsweise ist bei einer zeitschlitzbasieren Übertragungsart eine Anordnung des Messfensters in der Mitte des Sendezeitschlitzes vorteilhaft. Die Erfassung von N Messwerten erfolgt bevorzugt während der Trainingssequenz bei einem Signal nach dem GSM/EDGE Kommunikationsstandard.

Bei Schritt 130 wird Modulationsart des Signals aus einer Vielzahl von Modulationsarten basierend auf der erfassten Leistung und einem oder mehreren Referenzwerten oder Referenzmustern bestimmt und/oder die Verstärkungseinheit basierend auf der erfassten Leistung und einem oder mehreren Referenzwerten oder Referenzmustern konfiguriert.

Die Modulationsart des Signals kann z.B. dadurch bestimmt werden, dass ein maximaler Wert Nₘₐₓ und ein minimaler Wert Nₘᵢₙ aus den N Messwerten ermittelt werden. Für diese Ermittlung kann eine vorherige Sortierung der N Messwerte erforderlich sein. Nach der Bestimmung des maximalen Werts Nₘₐₓ und des minimalen Werts Nₘᵢₙ kann ein Errechnen der Differenz von Nₘₐₓ zu Nₘᵢₙ erfolgen. Die Differenz spiegelt die Spitzen-zu-Spitzen-Leistung des Signals wieder. Die Bestimmung umfasst vorzugsweise einen Vergleich mit einem unteren Schwellwert und mit einem oberen Schwellwert. Es kann ermittelt werden, ob die errechnete Differenz, innerhalb eines von dem unteren Schwellwert und im oberen Schwellwert aufgespannt Schwellwertbereichs liegt. Jede Modulationsart kann einen eigenen vorbestimmten unteren und einen vorbestimmten oberen Schwellwert aufweisen

Dabei kann die errechnete Differenz mit den Schwellwerten der unterschiedlichen Modulationsarten nacheinander verglichen werden. Die Reihenfolge, in der die Differenz mit der Schwellwerten der unterschiedlichen Modulationsarten verglichen wird, kann je nach Ausführungsform variieren. Beispielsweise können Wahrscheinlichkeiten der Verwendung verschiedener Modulationsarten bekannt sein und die Reihenfolge an diese angepasst sein. Falls die errechnete Differenz in den von dem unteren Schwellwert und dem oberen Schwellwert aufgespannten Schwellwertbereich einer spezifischen Modulationsart fällt, kann bestimmt werden, dass das Signal in dieser Modulationsart vorliegt. Beim Vergleich der errechneten Differenz mit dem Schwellwertbereich können die jeweiligen Schwellwertgrenzen in den Schwellwertbereich eingeschlossen oder von diesem ausgeschlossen sein. Anstelle der Differenzbildung ist es auch möglich, einen Quotienten aus dem maximalen Wert Nₘₐₓ und dem minimalen Werts Nₘᵢₙ zu bilden und diesen dem Vergleich zugrunde zu legen.

Dabei ist es, sowohl in der Ausgestaltung mit Differenzbildung wie auch in der Ausgestaltung mit Quotientenbildung, auch möglich, anstelle des maximalen Wertes Nₘₐₓ oder des minimalen Werts Nₘᵢₙ einen Leistungsmittelwert aus den N Messwerten heranzuziehen.

Anstelle der Ermittlung auf der Grundlage von Schwellwertvergleichs, oder zusätzlich zu derartigen Schwellwertvergleichs, ist es auch möglich, eine Korrelation des erfassten Amplitudenzeitverlaufs mit einem oder mehreren Referenzmustern vorzunehmen. Die Bestimmung der Modulationsart erfolgt dabei an Hand der Ergebnisse der Korrelation.

In einer Ausführungsform unterscheidet die Schaltungsanordnung zwischen den Modulationsarten GMSK und 8-PSK. In diesem Fall ist der vorbestimmte untere Schwellwert und der vorbestimmte obere Schwellwert von 8-PSK jeweils größer als der vorbestimmte untere Schwellwert und der vorbestimmte obere Schwellwert von GMSK. Beispielsweise kann, bei einer Verwendung von 8-PSK und GMSK bei einer Modulation im Mobilfunkstandard GSM/EDGE, der untere Schwellwert von GMSK 0 dB sein und der obere Schwellwert von GMSK 0,1 dB sein, wobei beispielsweise der untere Schwellwert von 8-PSK 2 dB und der obere Schwellwert von 8-PSK 4 dB sein kann.

In dem Fall, in dem nur zwei verschiedene Modulationsarten zu unterscheiden sind, kann ein einziger Schwellwert zur Bestimmung ausreichen. Die Modulationsart wird demnach dadurch bestimmt, dass wenn die errechnete Differenz über ggf. unter dem Schwellwert liegt, die erste Modulationsart ausgewählt wird und ansonsten die zweite Modulationsart ausgewählt wird. Beispielsweise kann, bei einer Verwendung von 8-PSK und GMSK bei einer Modulation im Mobilfunkstandard GSM/EDGE ein solcher Schwellwert zwischen 0,5 und 1 dB liegen.

Dieses erfindungsgemäße Verfahren ermöglicht somit eine einfache Bestimmung einer Modulationsart eines empfangenen Signals anhand seiner Leistung. Dies kann für eine effiziente nachfolgende Bearbeitung des Signals von erheblicher Bedeutung sein.

Beispielsweise können so modulationsartspezifische Parameter bei der nachfolgenden Bearbeitung berücksichtigt werden.

Solche modulationsartspezifischen Parameter können insbesondere bei der nachfolgenden Bearbeitung eines Signals in einer Schaltungsanordnung, die ausgestaltet ist, Signale zwischen einem Endgerät und einer Antenne zu verstärken, hilfreich sein.

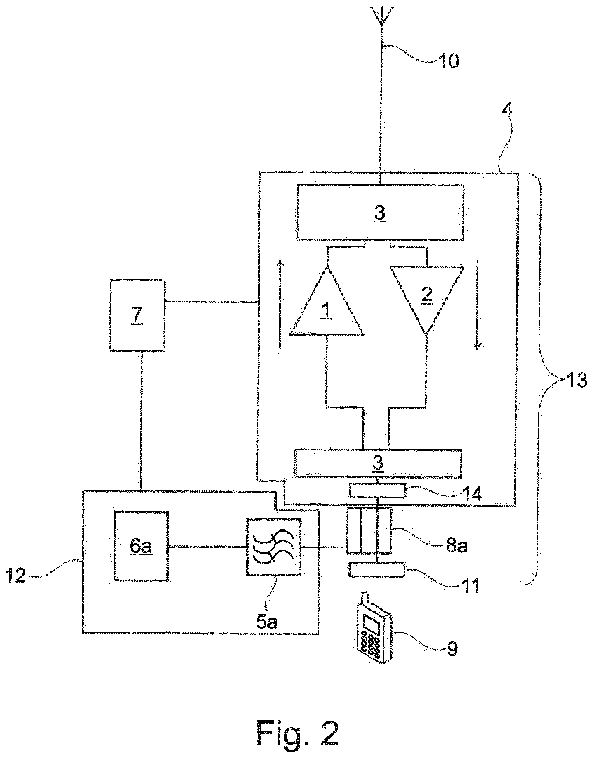

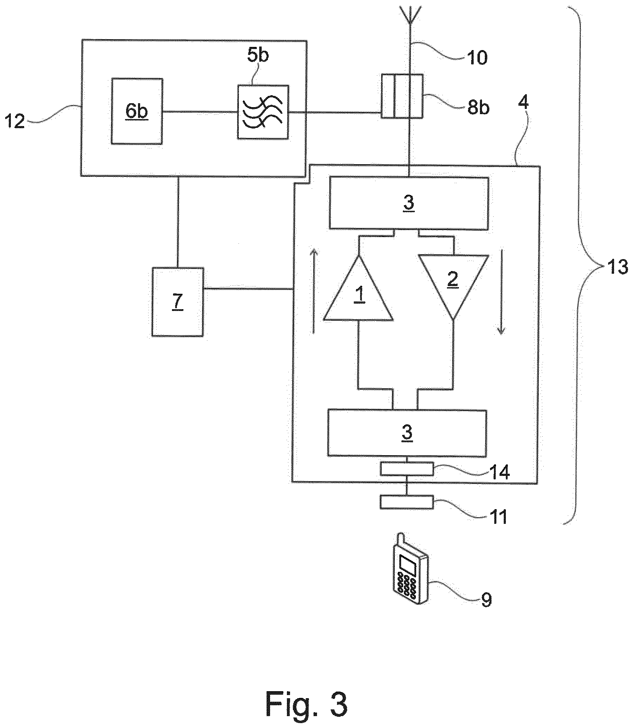

Nachfolgend werden die Figuren 2 und 3 beschrieben, welche zwei verschiedene Ausführungsformen zeigen, die eine Anpassung einer Verstärkungseinheit basierend auf einer ermittelten Modulationsart ermöglichen.

**Fig. 2** zeigt eine Schaltungsanordnung gemäß einer Ausführungsform der Erfindung, die eine Anpassung einer Verstärkungseinheit basierend auf einer ermittelten Modulationsart ermöglicht, wobei die Verstärkungseinheit eingerichtet ist, Signale zwischen einem Endgerät und einer Antenne zu verstärken.

Eine solche Schaltungsanordnung hat den Vorteil, dass die jeweils für eine Modulationsart spezifische maximale Ausgangsleistung von der Verstärkungseinheit unterstützt werden kann. Dies ist insbesondere dann hilfreich, wenn die Schaltungsanordnung Kommunikationsstandards unterstützt, die unterschiedliche Modulationsarten bereitstellen und diese Modulationsarten unterschiedliche maximale Ausgangsleistungen zulassen. In dem Fall kann nämlich eine optimale Verstärkung von Signalen der unterschiedlichen Modulationsarten dieses Kommunikationsstandards erreicht werden. Damit wird auch einer möglichen Übersteuerung der Verstärkerendstufen vorgebeugt und sichergestellt, dass der Verstärker im linearen Bereich arbeitet.

Die in Fig. 2 gezeigte Schaltungsanordnung 13 verbindet ein Endgerät 9 mit einer Antenne 10. Das Endgerät 9 ist vorzugsweise eine elektronische Vorrichtung, die in der Lage ist Drahtloskommunikationen durchzuführen, wie beispielsweise ein Mobiltelefon, ein Smartphone, ein Modem oder ein Funkmodul. Die Antenne 10 ist beispielsweise eine an einem Kraftfahrzeug extern angebrachte Antenne oder ein Antennenanschluss. Das Endgerät 9 und die Antenne 10 sind selbst nicht Teil der Schaltungsanordnung.

Die Schaltungsordnung 13 dient der Verstärkung der von dem Endgerät 9 gesendeten Signale, auch Sendesignale genannt, und/oder der von der Antenne 10 empfangenen Signale, auch Empfangssignale genannt. Die Verstärkung der Schaltungsanordnung 13 kann dabei so ausgelegt sein, dass sie die Dämpfung der Signalleistung zwischen der Antenne 10 und dem Endgerät 9 kompensiert.

Die Schaltungsanordnung 13 umfasst vorzugsweise eine Verstärkungseinheit 4, eine Detektoreinheit 12, eine Koppeleinheit 8a, eine Steuereinheit 7 sowie eine Übertragungseinheit 11. Die einzelnen Module und Einheiten können Teil der Schaltungsanordnung selbst oder unabhängig von der Schaltungsanordnung 13 sein. Die Detektoreinheit 12 dient zusammen mit der Steuereinheit 7 der Bestimmung der Modulationsart eines Signals. Die Steuereinheit 7 ist ferner ausgebildet, die Konfiguration und ggf. Einstellung der Verstärkungseinheit 4 basierend auf der bestimmten Modulationsart vorzunehmen. Die eingestellte Verstärkungseinheit 4 verstärkt anschließend die Signale.

Vorzugsweise werden, nach der Anpassung der Verstärkungseinheit nachfolgende Übertragungssignale, die von dem Endgerät gesendet und/oder die von der Antenne empfangen werden, mit Hilfe der Verstärkungseinheit verstärkt. Demnach kann die Verstärkungseinheit in beide Richtungen, also sowohl eingehende als auch ausgehende Signale verstärken. Die Modulationsartbestimmung wird jedoch vorzugsweise anhand eines von einem Endgerät an die Schaltungsanordnung übertragenen Signals durchgeführt. Eine Modulationsartbestimmung anhand eines Empfangssignals ist auch möglich und kann bei Verwendung verschiedener Modulationsarten von Nutzen sein.

Die Schaltungsanordnung 13 nimmt vorzugsweise mit Hilfe einer Übertragungseinheit 11 Sendesignale des Endgeräts zur leitungsbasierten Weiterverarbeitung mit Hilfe der Schaltungsanordnung auf und überträgt Empfangssignale der Antenne 10 nach der Weiterverarbeitung durch die Schaltungsanordnung an das Endgerät 9. Die Übertragungseinheit 11 bildet nicht notwendigerweise Teil der Schaltungsanordnung.

Die Übertragungseinheit 11 kann sowohl für eine drahtlose als auch drahtgebundene Kommunikation mit dem Endgerät 9 ausgelegt sein.

In dieser Ausführungsform schließt sich in Sendesignalrichtung an die Übertragungseinheit 11 eine Kopplungseinheit 8a an, die dazu dient, ein Sendesignal des Endgeräts in (zumindest) einen ersten Signalteil und einen zweiten Signalteil aufzuteilen und den ersten Signalteil der Detektoreinheit 12 und den zweiten Signalteil der Verstärkungseinheit 4 zuzuführen. Der Erfassung erfolgt in dieser Ausführungsform demnach bevor das Signal durch die Verstärkungseinheit verstärkt wurde.

Die Kopplungseinheit 8a umfasst beispielsweise einen Richtkoppler oder Splitter. Bei der von der Kopplungseinheit 8a bereitgestellten Auskopplung kann der erste Signalteil des Sendesignals des Endgeräts vorzugsweise eine geringere Leistung aufweisen als der zweite Signalteil. Demnach wird nur ein geringer Anteil der Leistung für die Detektion verwendet und der zweite Signalteil kann ohne größeren Leistungsverlust an die Verstärkungseinheit 4 und/oder die Antenne 10 weitergeleitet werden.

Anschließend kann der erste Signalteil mittels eines Hochfrequenzfilters (HF-Filter) 5a gefiltert werden bevor es einem Leistungsdetektor zugeführt wird. Dies hat den Vorteil, dass störende Signalanteile vor der Auswertung der Leistung durch den Leistungsdetektor herausgefiltert werden können. Auch kann das Filter 5a dazu verwendet werden, um nur das Sende- bzw. das Empfangssignal an den Leistungsdetektor durchzulassen. Dies kann bei Sende- und Empfangsnutzsignalen, die in unterschiedlichen Frequenzbereichen übertragen werden, beispielsweise durch einen oder mehrere Bandpassfilter erfolgen.

Das Erfassen der Leistung des Signals in der Schaltungsanordnung erfolgt dann mithilfe des Leistungsdetektors. Der Leistungsdetektor umfasst beispielsweise einen RMS(Root Means Square)-Detektor, einen logarithmischen Detektor, einen linearen Detektor oder einen Hüllkurvendemodulator. Der Leistungsdetektor muss in dieser Ausführungsform so dimensioniert sein, dass die maximal erwartete Leistung des vom Endgerät stammenden Signals noch im linearen Bereich des Detektors gemessen werden kann.

Die Anordnung des Leistungsdetektors vor der Verstärkungseinheit, wie in Fig. 2 gezeigt, hat den Vorteil, dass die Modulationsart bestimmt werden kann bevor das Signal durch die Verstärkungseinheit verstärkt wird. Demnach kann die Verstärkungseinheit bereits vor der Verstärkung basierend auf der bestimmten Modulationsart konfiguriert werden. Dies setzt jedoch eine höhere Empfindlichkeit der Detektionseinheit voraus, da das zu analysierende Signal noch nicht verstärkt wurde.

Der Leistungsdetektor 6a gibt die erfassten Leistungswerte z.B. in Form einer Gleichspannung dann an die Steuereinheit 7 weiter. Die Steuereinheit 7 umfasst beispielsweise einen Mikrocontroller, einen Analog-Digital-Umsetzer (ADC) und/oder eine Complex Programmable Logic Device (CPLD).

Die Steuereinheit 7 kann dann den maximalen Wert Nₘₐₓ und den minimalen Wert Nₘᵢₙ aus den N Messwerten ermitteln und die Differenz von Nₘₐₓ zu Nₘᵢₙ errechnen. Anschließend kann die Steuereinheit die errechnete Differenz mit einem oder mehreren Schwellwerten vergleichen. Für den Vergleich werden, wie bereits bezüglich Fig. 1 beschrieben, die entsprechenden Schwellwerte unterschiedlicher Modulationsarten mit der Differenz verglichen. Falls die Differenz in einen Schwellwertbereich einer Modulationsart fällt, kann die Steuereinheit bestimmen, dass das Signal in dieser Modulationsart vorliegt. Auch kann die Modulationsartbestimmung anhand nur eines Schwellwerts durchgeführt werden, wenn nur zwischen zwei Modulationsarten zu unterscheiden ist.

Wurde die Modulationsart des Signals aus einer Vielzahl von Modulationsarten basierend auf dem Vergleich bestimmt, kann die Steuereinheit die Verstärkungseinheit basierend auf der bestimmten Modulationsart und/oder der errechneten Differenz konfigurieren. Eine erfindungsgemäße Verstärkungseinheit 4 kann beispielsweise einen oder mehrere Verstärker 1, 2 aufweisen. Diese können in parallelen Signalzweigen angeordnet sein. In der in Fig. 2 dargestellten Ausführungsform wird jeweils nur ein Empfangsverstärker 2 und ein Sendeverstärker 1 gezeigt. Die Verstärkungseinheit kann jedoch eine Vielzahl von Sende- und Empfangsverstärker aufweisen, je nachdem wie die Verstärkung realisiert ist und je nachdem welche Kommunikationsstandards und Frequenzbänder unterstützt werden sollen. Die Verstärkungseinheit kann außerdem eine Signalaufteilungseinheit 3 zur Aufteilung des Signals in einen Sende- und Empfangszweig aufweisen. Die Signalaufteilungseinheit 3 kann eine oder mehrere Frequenzweichen, eine oder mehrere Koppler oder einen oder mehrere Schalter 3 aufweisen, die ein Aufteilen des Signals in einen Sende- und Empfangszweig ermöglichen. Eine solche Signalaufteilungseinheit 3 kann beispielsweise auch durch die Steuereinheit konfiguriert bzw. gesteuert werden.

Das Konfigurieren der Verstärkungseinheit kann auf unterschiedliche Weisen erfolgen. Vorzugsweise umfasst das Konfigurieren der Verstärkungseinheit ein Konfigurieren des einen oder der mehreren Verstärker und/oder ein Konfigurieren der Signalführung in der Verstärkungseinheit und/oder ein Konfigurieren einer Dämpfungseinrichtung.

Beim Konfigurieren des einen oder der mehreren Verstärker werden Einstellungen des einen oder der mehreren Verstärker selbst angepasst. Vorzugsweise wird dabei der Arbeitspunkt von zumindest einem oder der mehreren Verstärker angepasst. Insbesondere können der eine oder die mehreren Verstärker basierend auf der errechneten Differenz angepasst werden. Dies ermöglicht es den einen oder die mehreren Verstärker an die maximale Leistungsdifferenz des zu verstärkenden Signals anzupassen und somit einen Betrieb im linearen Bereich des Verstärkers sicherzustellen.

Die Alternative oder ergänzende Konfiguration der Signalführung ermöglicht eine Konfiguration der Verstärkungseinheit durch Aktivieren und/oder Deaktivieren verschiedener Signalzweige, die unterschiedlich ausgestaltete Verstärkereinrichtungen aufweisen können. Somit kann beispielsweise ein erster Signalzweig einen Verstärker für eine erste maximale Ausgangsleistung einer ersten Modulationsart aufweisen und ein zweiter Signalzweig einen Verstärker für eine zweite maximale Ausgangsleistung einer zweiten Modulationsart aufweisen. Die Verstärkungseinheit kann dann so konfiguriert werden, dass bei einem Signal einer ersten Modulationsart der erste Signalzweig und bei einem Signal einer zweiten Modulationsart der zweite Signalzweig geschaltet wird.

Auch kann alternativ oder ergänzend die Verstärkungseinheit mithilfe einer Dämpfungseinrichtung 14 konfiguriert werden, die das Signal vor oder nach der Verstärkung dämpft. Die Dämpfungseinrichtung 14 kann eine Anpassung der Verstärkung der Verstärker 1, 2 bereitstellen, ohne die Verstärker 1, 2 selbst anzupassen. Dies hat den Vorteil, dass der Signalverstärker auf einfache Weise und kostengünstig hergestellt werden kann. Die Verstärkung der Schaltungsanordnung 13 ergibt sich in dem Fall aus der konstanten Verstärkung des Verstärkers 1, 2 abzüglich der Signal-Dämpfung einer konfigurierbaren Dämpfungseinrichtung 14. Diese Dämpfungseinrichtung 14 kann innerhalb eines Bereichs von Dämpfungswerten kontinuierlich oder diskret einstellbar sein. Die Dämpfungseinrichtung 14 ist in dieser Ausführungsform in Richtung des vom Endgerät gesendeten Signals nach der Koppeleinheit 8a angeordnet. Die Dämpfungseinrichtung kann in anderen Ausführungsformen jedoch auch an anderen Stellen der Schaltungsanordnung angeordnet sein. Beispielsweise kann sie direkt vor den Verstärker 1 in einer Ausführungsform angeordnet sein. Andere Ausgestaltungen sind je nach Schaltungsaufbau möglich.

Das Konfigurieren der Verstärkungseinheit soll derart ausgeführt sein, dass eine Ausgangsleistung des verstärkten Signals an der Antenne eine maximal zulässige Ausgangsleistung eines verwendeten Übertragungsstandards des Signals nicht überschreitet. Damit wird sichergestellt, dass die Verstärkungseinheit standardkonform agiert. Vorzugsweise wird das Einhalten einer maximal zulässigen Ausgangsleistung eines verwendeten Übertragungsstandards des Signals durch Konfigurieren der Dämpfungseinrichtung 14 erreicht.

Vorzugsweise ist die Schaltungsanordnung weiterhin ausgestaltet, um gleichzeitig die Modulationsart bestimmen und Übertragungssignale verstärken zu können. Dies wird durch Aufteilen des Signals in zumindest einen ersten Signalteil und einen zweiten Signalteil erreicht, wobei der erste Signalteil an die Detektoreinheit und der zweite Signalteil an die Verstärkungseinheit geleitet wird. Demnach wird die Übertragung und die Verstärkung durch die Verstärkungseinheit nicht durch das Durchführen der Modulationsartbestimmung unterbrochen oder gestört.

Vorzugsweise kann die Schaltungsanordnung weiterhin ausgestaltet sein, um eine mittlere Leistung des Signals zu ermitteln und den einen oder die mehreren Schwellwerte basierend auf der ermittelten mittleren Leistung des Signals anzupassen.

Diese Anpassung des einen oder der mehreren Schwellwerte ermöglicht eine genauere Bestimmung der Modulationsart. Die Anpassung kann zum einen deshalb erforderlich sein, weil der Leistungsdetektor eine Tiefpasswirkung am Ausgang hat. Durch die Tiefpasswirkung werden die maximalen und minimalen Werte Nₘₐₓ und Nₘᵢₙ mit zunehmender Tiefpasswirkung gemittelt und somit die Differenz von Nₘₐₓ und Nₘᵢₙ verringert. Zum anderen kann die Anpassung erforderlich sein, wenn der Leistungsdetektor nach dem einen oder den mehreren Verstärkern angeordnet ist und der eine oder die mehreren Verstärker das zu verstärkende Signal übersteuern. Dies hat nämlich zur Folge, dass sich die Differenz der Werte Nₘₐₓ zu Nₘᵢₙ verringert.

Vorzugsweise kann die Schaltungsanordnung weiterhin ausgestaltet sein, eine Dauer des Signals zu ermitteln und die Verstärkungseinheit basierend auf der ermittelten Dauer des Signals zu konfigurieren. Das Konfigurieren der Verstärkungseinheit kann ein Reduzieren der durch den einen oder den mehreren Verstärkern erzeugten Signalverstärkung umfassen, wenn die Signaldauer länger als eine vorbestimmte Zeitspanne ist. Wenn das Signal mit Hilfe einer zeitschlitzbasieren Übertragungsart gesendet wird, entspricht die vorbestimmte Zeitspanne vorzugsweise zwei oder mehr aufeinanderfolgenden Sendezeitschlitzen. Die Reduzierung der Leistung bei länger andauernden Signalen ermöglicht Verstärker vor thermischer Überlastung zu schützen. Eine solche Leistungsreduzierung kommt auch in verschiedenen Mobilfunkstandards vor, siehe beispielsweise ETSI TS 151 010-1 v.12.5.0. Die Schaltungsanordnung ist somit in der Lage das Verhalten verschiedener Mobilfunkstandards teilweise nachzubilden und sich somit an diese anzupassen.

**Fig. 3** zeigt eine Schaltungsanordnung, die eine Anpassung einer Verstärkungseinheit basierend auf einer ermittelten Modulationsart ermöglicht, gemäß einer anderen Ausführungsform der Erfindung.

Die Schaltungsanordnung der Fig. 3 stimmt größtenteils mit der Schaltungsanordnung der Fig. 2 überein. Die Schaltungsanordnung der Fig. 3 unterscheidet sich lediglich durch die Anordnung der Detektoreinheit 12 und den sich daraus ergebenen Konsequenzen. In der Fig. 3 ist die Detektoreinheit 12 hinter der Verstärkungseinheit 4 in Richtung des vom Endgerät 9 übermittelten Sendesignals angeordnet.

Die Anordnung des Leistungsdetektors 6b hinter der Verstärkungseinheit 4 hat den Vorteil, dass die Auswertung auf einem verstärkten Signal stattfinden kann und deshalb die Detektionseinheit 12 weniger empfindlich ausgestaltet sein muss. Jedoch müssen hier eventuelle Verzerrungen, die Aufgrund der Verstärkung auftreten, berücksichtigt werden. Da das Signal verstärkt wird, bevor die Modulationsart bestimmt ist, hat diese Anordnung aber den Nachteil, dass solange mit Standardwerten (Defaultwerten) verstärkt werden muss, bis die Modulationsart bestimmt wurde.

Diese Anordnung hat jedoch zusätzlich den Vorteil, dass mithilfe der Detektionseinheit 12 auch die Ausgangsleistung nach der Verstärkung gemessen und überprüft werden kann. Damit kann beispielsweise ein Einhalten der durch einen Kommunikationsstandard geforderten maximalen Ausgangsleistung messtechnisch kontrolliert werden. Dagegen könnte bei der in Fig. 2 gezeigten Schaltungsanordnung eine entsprechende Überprüfung der von den Kommunikationsstandards geforderten maximalen Ausgangsleistungen dadurch erfolgen, dass rechnerisch die resultierende Ausgangsleistung basierend auf der bekannten Dämpfung der Dämpfungseinrichtung 14 und der bekannten Verstärkung des Verstärkers 1 ermittelt und gegen den/die vorgegebenen Grenzwert/e verglichen wird.

Das durch die Verstärkungseinheit verstärkte Signal wird demnach durch eine Koppeleinheit 8b in (zumindest) einen ersten Signalteil und einen zweiten Signalteil aufgeteilt. Der erste Signalteil wird anschließend an die Detektoreinheit geführt und der zweite Signalteil wird zur Übertragung an die Antenne 10 geführt.

Die Detektoreinheit 12 weist einen HF-Filter 5b und einen Leistungsdetektor 6b auf, die an das verstärkte Signal angepasst sind. Der Leistungsdetektor muss in dieser Ausführungsform demnach so dimensioniert sein, dass die maximal erwartete Leistung des vom Verstärker verstärkten Signals noch im linearen Bereich des Detektors gemessen werden kann.

In einer anderen Ausführungsform kann das Signal, das an die Detektoreinheit geleitet wird, auch direkt vor dem Eingang oder nach dem Ausgang des Verstärkers 1 ausgekoppelt werden.

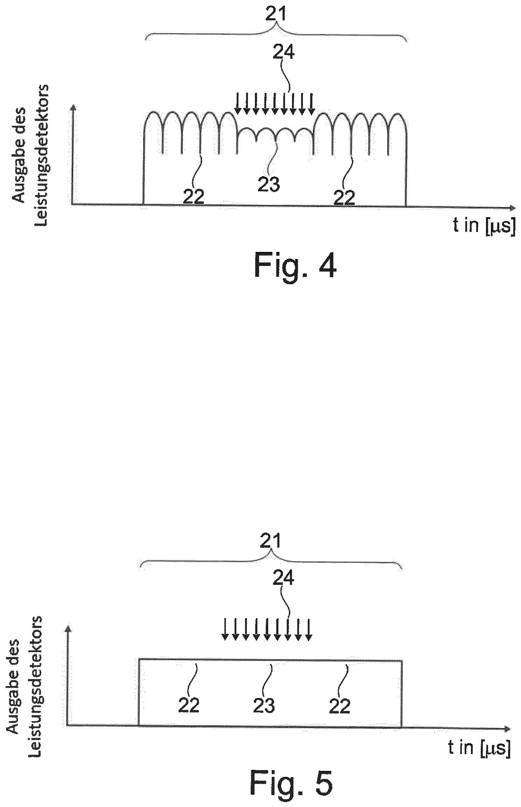

Die Figuren 4, 5 und 7 zeigen die zeitliche Veränderung einer Leistungsdetektorausgabe (Amplitude) für verschiedene Modulationsarten. Die Leistung am Leistungsdetektor ist beispielsweise eine Ausgangsspannung (in Volt).

**Fig. 4** zeigt eine Leistung eines mittels 8-PSK modulierten Signals als Ausgabe eines Leistungsdetektors.

Es handelt sich bei der abgebildeten Ausgabe des Leistungsdetektors um eine Leistung eines 8-PSK modulierten Signals im Mobilfunkstandard GSM/EDGE. Die Fig. 4 zeigt einen Sendeschlitz 21 bei der Modulationsart 8-PSK im Standard EDGE. Der Sendezeitschlitz hat in dem Fall eine Dauer von 577 µs. Wie in der Abbildung ersichtlich, erfolgt die Erfassung von N Messwerten 24 bevorzugt in der Mitte des Sendezeitschlitz 21. Die Erfassung von N Messwerten erfolgt bevorzugt während der deterministischen Trainingssequenz 23. In einer praktischen Umsetzung werden bevorzugt 32 Messwerte über eine Dauer von 100 µs aufgezeichnet. Die messbare Differenz von Nₘₐₓ zu Nₘᵢₙ beträgt beispielsweise 2 dB bis 4 dB.

**Fig. 5** zeigt eine Leistung eines mittels GMSK modulierten Signals als Ausgabe eines Leistungsdetektors.

Es handelt sich bei der abgebildeten Ausgabe des Leistungsdetektors um eine Leistung eines GMSK modulierten Signals im Mobilfunkstandard GSM/EDGE. Die Fig. 4 zeigt einen Sendeschlitz 21 bei der Modulationsart GMSK. Wie in der Abbildung ersichtlich, erfolgt auch in diesem Fall die Erfassung von N Messwerten 24 bevorzugt in der Mitte des Sendezeitschlitz 21, zwischen den Nutzdaten 22. Die Erfassung von N Messwerten erfolgt bevorzugt während der deterministischen Trainingssequenz 23. In einer praktischen Umsetzung werden 32 Messwerte über eine Dauer von 100 µs aufgezeichnet. Die messbare Differenz von Nₘₐₓ zu Nₘᵢₙ beträgt beispielsweise 0 dB bis 0,1 dB.

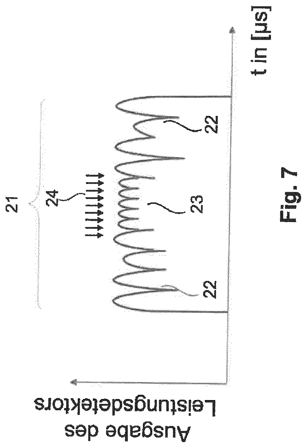

**Fig. 7** zeigt eine Leistung eines mittels QAM (16-QAM oder 32-QAM) modulierten Signals als Ausgabe eines Leistungsdetektors.

Es handelt sich bei der abgebildeten Ausgabe des Leistungsdetektors um eine Leistung eines QAM modulierten Signals im Mobilfunkstandard LTE. Die Ausgabe des Leistungsdetektors eines 16-QAM-Singals unterscheidet sich nur geringfügig von der eines 32-QAM-Signals. Die Modulationsartbestimmung beschränkt sich somit bei QAM-Signalen darauf, festzustellen, dass es sich um ein QAM-Signal handelt, ohne zu unterscheiden, ob das Signal ein 16-QAM oder 32-QAM moduliertes Signal ist. Die Erfassung von N Messwerten 24 erfolgt auch bei diesem Beispiel bevorzugt in der Mitte des Sendezeitschlitz 21, zwischen den Nutzdaten 22. Die Erfassung von N Messwerten erfolgt bevorzugt während der deterministischen Trainingssequenz 23. In einer praktischen Umsetzung werden beispielsweise 32 Messwerte über eine Dauer von 100 µs aufgezeichnet. Die messbare Differenz von Nₘₐₓ zu Nₘᵢₙ beträgt beispielsweise mehr als 4 dB.

Die unterschiedlichen messbaren Differenzen von Nₘₐₓ zu Nₘᵢₙ der gezeigten Modulationsverfahren macht deutlich, wie der Schwellwertabgleich in der Schaltungsanordnung ablaufen kann. Demnach sind die Schwellwerte der unterschiedlichen Modulationsarten so zu wählen, dass die jeweils ermittelte Differenz in den entsprechenden Bereich fällt. Gilt es nur GMSK von 8-PSK zu unterscheiden, kann auch nur ein einziger Schwellwert verwendet werden. Ist die errechnete Differenz über dem Schwellwert, handelt es sich um 8-PSK und ist die errechnete Differenz unter dem Schwellwert so handelt es sich um GMSK. Ein beispielhafter Schwellwert könnte in dem oben genannten Fall zwischen 0,5 und 1 dB liegen.

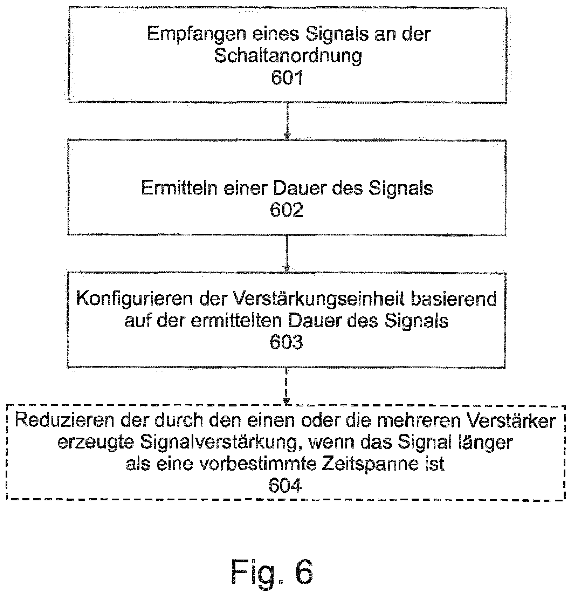

Fig. 6 zeigt weitere Verfahrensschritte des Verfahrens zur Verstärkung von Signalen zwischen einem Endgerät und einer Antenne mithilfe einer Schaltungsanordnung gemäß einer Ausführungsform der Erfindung, wobei die Verstärkung zusätzlich basierend auf einer Dauer eines Signals angepasst wird.

Dies kann insbesondere bei lang andauernden Signalen von Vorteil sein, da eine thermische Überlastung der Verstärkungseinheit, insbesondere einzelner Verstärker und ggf. anderer Bauteile, vermieden werden kann.

Ein solches Verfahren zur Verstärkung von Signalen zwischen einem Endgerät und einer Antenne kann mithilfe einer Schaltungsanordnung ausgeführt werden, die bevorzugt einen oder mehrere Verstärker aufweist, die in parallelen Signalzweigen angeordnet sind. Beispielsweise kann hierfür eine Schaltungsanordnung herangezogen werden, die auch für die Bestimmung der Modulationsart genutzt wird, wobei zusätzlich Mittel vorgesehen sind, die dazu ausgelegt sind, die Dauer eines Signals zu analysieren. Die Mittel können z.B. durch eine Anpassung der Detektoreinheit und der Steuereinheit bereitgestellt werden.

Die zusätzlichen Verfahrensschritte beginnen bei Schritt 601 mit einem Empfangen eines Signals an der Schaltungsanordnung. Das Signal kann entweder über ein Kabel oder eine Funkschnittstelle an der Schaltungsanordnung empfangen werden. Dieser Schritt entspricht in der bevorzugten Ausgestaltung dem Schritt 110 in dem Verfahren gemäß Fig. 1.

Bei Schritt 602 wird die Dauer des Signals ermittelt. Dafür können beispielsweise eine Detektoreinheit und eine Steuereinheit, wie in Figuren 2 und 3 gezeigt, verwendet werden. Die Detektoreinheit sowie die nachfolgende Steuereinheit müssen in der Lage sein die Dauer des Signals zu ermitteln.

Anschließend folgt bei Schritt 603 ein Konfigurieren der Verstärkungseinheit basierend auf der ermittelten Dauer des Signals. Insbesondere kann die Verstärkung der Verstärkungseinheit an die Dauer des Signals angepasst werden. So kann beispielsweise bei Schritt 604 die durch den einen oder die mehreren Verstärker erzeugte Signalverstärkung reduziert werden, wenn das Signal länger als eine vorbestimmte Zeitspanne ist. Eine solche vorbestimmte Zeitspanne kann beispielsweise größer als 1000 µs, vorzugsweise größer als 2000 µs und/oder kleiner als 10000 µs, vorzugsweise kleiner als 5000 µs sein. Wenn das Signal mit Hilfe einer zeitschlitzbasieren Übertragungsart gesendet wird, kann die vorbestimmte Zeitspanne zwei oder mehr aufeinanderfolgenden Sendezeitschlitzen entsprechen.

### Bezugszeichenübersicht

- 1: Sendeverstärker
- 2: Empfangsverstärker
- 3: Signalaufteilungseinheit (z.B. Frequenzweiche/Schalter/Koppler)
- 4: Verstärkungseinheit
- 5a/5b: HF-Filter
- 6a/6b: Leistungsdetektor
- 7: Steuereinheit
- 8a/8b: Koppeleinheit
- 9: Endgerät
- 10: Antenne
- 11: Übertragungseinheit
- 12: Detektoreinheit
- 13: Schaltungsanordnung
- 14: Dämpfungseinrichtung

- 21: Sendezeitschlitz
- 22: Nutzdaten
- 23: Trainingssequenz
- 24: Erfassung von N Messwerten

## Patentansprüche

1. Verfahren zum Verstärken eines Signals zwischen einem Endgerät (9) und einer Antenne (10) mithilfe einer Schaltungsanordnung (13), wobei die Schaltungsanordnung (13) eine Verstärkungseinheit (4) umfasst, aufweisend einen oder mehrere Verstärker (1, 2), angeordnet in parallelen Signalzweigen, wobei das Verfahren die folgenden Verfahrensschritte umfasst:
- Empfangen (110) eines Signals an der Schaltungsanordnung (13);
- Erfassen (120) einer Leistung des Signals mit N Messwerten in einem Messfenster, wobei das Erfassen der Leistung des Signals in der Schaltungsanordnung (13) mithilfe eines Leistungsdetektors (6a, 6b) erfolgt;
- Bestimmen (130) einer Modulationsart des Signals aus einer Vielzahl von Modulationsarten basierend auf der erfassten Leistung und einem oder mehreren Referenzwerten oder Referenzmustern;
- Konfigurieren der Verstärkungseinheit (4) basierend auf der bestimmten Modulationsart;
- Verstärken des Signals zwischen einem Endgerät (9) und einer Antenne (10) mit der Verstärkungseinheit (4).

2. Verfahren nach Anspruch 1,
wobei die N Messwerte aufeinanderfolgend abgetastete Werte des Signals sind, und/oder
wobei das Erfassen der Leistung des Signals mit N Messwerten in einem Messfenster ein Abtasten des Signals in dem Messfenster umfasst, und
wobei das Messfenster vorzugsweise länger als die Dauer eines modulierten Symbols des Signals ist.

3. Verfahren nach Anspruch 1 oder 2, wobei das Bestimmen der Modulationsart ein Vergleichen eines Amplitudenzeitverlaufs der erfassten Leistung mit einem Referenzmuster umfasst.

4. Verfahren nach einem der Ansprüche 1 bis 3, wobei das Bestimmen der Modulationsart umfasst:
- Ermitteln eines ersten Leistungswerts und eines zweiten Leistungswerts, wobei der erste und der zweite Leistungswert jeweils ein unterschiedlicher aus einem maximalen Leistungswert Nₘₐₓ, einem minimalen Leistungswert Nₘᵢₙ und einem Leistungsmittelwert aus den N Messwerten ist;
- Errechnen eines Vergleichsparameters aus dem ersten und dem zweiten Leistungswert; und
- Vergleichen des Vergleichsparameters mit einem oder mehreren Schwellwerten.

5. Verfahren nach Anspruch 4, wobei der Vergleichsparameter aus dem ersten und dem zweiten Leistungswert eine Differenz oder einen Quotienten aus dem ersten und dem zweiten Leistungswert umfasst.

6. Verfahren nach Anspruch 4 oder 5,
wobei der Vergleich mit dem einen oder den mehreren Schwellwerten einen Vergleich mit einem unteren Schwellwert und mit einem oberen Schwellwert umfasst,
wobei vorzugsweise jede der Vielzahl von Modulationsarten einen vorbestimmten unteren und einen vorbestimmten oberen Schwellwert aufweist, und die Modulationsart des Signals dadurch bestimmt wird, dass der Vergleichsparameter größer oder gleich dem vorbestimmten unteren und kleiner oder gleich dem vorbestimmten oberen Schwellwert der Modulationsart ist.

7. Verfahren nach einem der Ansprüche 1 bis 6, wobei die Vielzahl von Modulationsarten zumindest eine der folgenden Modulationsarten umfasst: GMSK, 8-PSK, 16-QAM oder 32-QAM.

8. Verfahren nach einem der vorangehenden Ansprüche, wobei das Verfahren ferner umfasst:
- Bestimmen des Frequenzbereichs und/oder des Zeitverlaufs des Signals;
- Begrenzen der Vielzahl von Modulationsarten basierend auf dem bestimmten Frequenzbereich und/oder Zeitverlauf des Signals.

9. Verfahren nach einem der Ansprüche 4 bis 6 oder einem der Ansprüche 7 bis 8, wenn diese von einem der Ansprüche 4 bis 6 abhängen, wobei das Verfahren weiterhin umfasst: Konfigurieren der Verstärkungseinheit (4) basierend auf dem bestimmten Vergleichsparameter.

10. Verfahren nach einem der vorangehenden Ansprüche, wobei das Konfigurieren der Verstärkungseinheit (4) ein Konfigurieren des einen oder der mehreren Verstärker (1, 2) umfasst und/oder ein Konfigurieren der Signalführung in der Verstärkungseinheit umfasst und/oder ein Konfigurieren einer Dämpfungseinrichtung umfasst.

11. Verfahren nach einem der vorangehenden Ansprüche, wobei das Verfahren weiterhin umfasst:
- Ermitteln einer mittleren Leistung des Signals;
- Anpassen des einen oder der mehreren Referenzwerte oder Referenzmuster basierend auf der ermittelten mittleren Leistung des Signals.

12. Verfahren nach einem der vorangehenden Ansprüche, wobei das Verfahren weiterhin umfasst:
- Ermitteln (602) einer Dauer des Signals;
- Konfigurieren (603) der Verstärkungseinheit (4) basierend auf der ermittelten Dauer des Signals;
- Reduzieren (604) der durch den einen oder den mehreren Verstärkern (1, 2) erzeugten Signalverstärkung, wenn das Signal länger als eine vorbestimmte Zeitspanne ist.

13. Verfahren nach Anspruch 12, wobei, wenn das Signal mit Hilfe einer zeitschlitzbasieren Übertragungsart gesendet wird, die vorbestimmte Zeitspanne zwei oder mehr aufeinanderfolgenden Sendezeitschlitzen entspricht.

14. Schaltungsanordnung (13) zum Verstärken eines Signals zwischen einem Endgerät (9) und einer Antenne (10) umfassend:
- eine Übertragungseinheit (11), die eingerichtet ist, ein Signal zu empfangen;
- einen Leistungsdetektor (6a, 6b), der eingerichtet ist, eine Leistung des Signals mit N Messwerten in einem Messfenster zu erfassen;
- eine Verstärkungseinheit (4), aufweisend einen oder mehrere Verstärker (1, 2), angeordnet in parallelen Signalzweigen, die eingerichtet ist, das Signal zwischen dem Endgerät (9) und der Antenne (10) zu verstärken;
- eine Steuereinheit (7), die eingerichtet ist, eine Modulationsart des Signals aus einer Vielzahl von Modulationsarten basierend auf der erfassten Leistung und einem oder mehreren Referenzwerten oder Referenzmustern zu bestimmen und die Verstärkungseinheit (4) basierend auf der bestimmten Modulationsart zu konfigurieren.

15. Schaltungsanordnung nach Anspruch 14, die ferner dazu ausgelegt ist, das Verfahren gemäß einem der Ansprüche 2 bis 13 auszuführen.

## Claims

1. Method for amplifying a signal between a terminal (9) and an antenna (10) by means of a circuit arrangement (13), wherein the circuit arrangement (13) comprises an amplifier unit (4), having one or more amplifiers (1, 2), arranged in parallel signal branches, wherein the method comprises the following method steps:
- receiving (110) a signal at the circuit arrangement (13);
- detecting (120) an output of the signal with N measurement values in a measurement window, wherein the output of the signal is detected in the circuit arrangement (13) by means of an output detector (6a, 6b);
- determining (130) a modulation type of the signal from a plurality of modulation types based on the detected output and one or more reference values or reference patterns;
- configuring the amplifier unit (4) based on the determined modulation type;
- amplifying the signal between a terminal (9) and an antenna (10) with the amplifier unit (4).

2. Method according to claim 1,
wherein the N measurement values are successively scanned values of the signal, and/or
wherein the detection of the output of the signal with N measurement values in a measurement window comprises scanning the signal in the measurement window,
wherein the measurement window is preferably longer that the duration of a modulated symbol of the signal.

3. Method according to claim 1 or 2, wherein determining the modulation type comprises comparing an amplitude time curve of the detected output with a reference pattern.

4. Method according to any of claims 1 to 3, wherein determining the modulation type comprises:
- determining a first output value and a second output value, wherein the first and the second output value respectively is a different one from a maximum output value Nₘₐₓ, a minimum output value Nₘᵢₙ and an average output value of the N measured values;
- calculating a comparison parameter from the first and the second output value;
and
- comparing the comparison parameter with one or more thresholds.

5. Method according to claim 4, wherein the comparison parameter of the first and the second output value comprises a difference or a quotient of the first and the second output value.

6. Method according to claim 4 or 5,
wherein the comparison with the one or more threshold values comprises a comparison with a lower threshold and with an upper threshold,
wherein preferably each of the plurality of modulation types has a predetermined lower and a predetermined upper threshold, and the modulation type of the signal is determined in that the comparison parameter is greater than or equal to the predetermined lower one and smaller or equal to the predetermined upper threshold of the modulation type.

7. Method according to any of claims 1 to 6, wherein the plurality of modulation types comprises at least one of the following modulation types: GMSK, 8-PSK, 16-QAM or 32-QAM.

8. Method according to any of the preceding claims, wherein the method further comprises:
- determining the frequency range and/or the time curve of the signal;
- limiting the plurality of modulation types based on the determined frequency range and/or time curve of the signal.

9. Method according to any of claims 4 to 6 or any of claims 7 to 8, when the latter are dependent on any of claims 4 to 6, wherein the method further comprises: configuring the amplifier unit (4) based on the determined comparison parameter.

10. Method according to any of the preceding claims, wherein the configuration of the amplifier unit (4) comprises configuring the one or more amplifiers (1, 2) and/or comprises configuring the signal routing in the amplification unit and/or comprises configuring a damping device.

11. Method according to any of the preceding claims, wherein the method further comprises:
- determining an average output of the signal;
- adjusting the one or more reference values or reference patterns based on the determined average output of the signal.

12. Method according to any of the preceding claims, wherein the method further comprises:
- determining (602) a duration of the signal;
- configuring (603) the amplifier unit (4) based on the determined duration of the signal;
- reducing (604) the signal amplification produced by the one or more amplifiers (1, 2) if the signal is longer than a predetermined time period.

13. Method according to claim 12, wherein if the signal is sent by means of a time slot-based type of transmission, the predetermined time period corresponds to two or more consecutive transmission time slots.

14. Circuit arrangement (13) for amplifying a signal between a terminal (9) and an antenna (10) comprising:
- a transmission unit (11), which is configured to receive a signal;
- a output detector (6a, 6b), which is configured to detect an output of the signal with N measurement values in a measurement window;
- an amplifier unit (4), having one or more amplifiers (1, 2), arranged in parallel signal branches, which is configured to amplify the signal between the terminal (9) and the antenna (10);
- a control unit (7), which is configured to determine a modulation type of the signal from a plurality of modulation types based on the detected output and one or more reference values or reference patterns and to configure the amplifier unit (4) based on the determined modulation type.

15. Circuit arrangement according to claim 14, which is further configured to perform the method according to any of claims 2 to 13.

## Revendications

1. Procédé d'amplification d'un signal entre un terminal (9) et une antenne (10) à l'aide d'un circuit (13), dans lequel le circuit (13) comprend une unité d'amplification (4), présentant un ou plusieurs amplificateurs (1, 2), disposés dans des branches de signal parallèles, dans lequel le procédé comprend les étapes de procédé suivantes :
- réception (110) d'un signal au niveau du circuit (13) ;
- détection (120) d'une puissance du signal avec N valeurs de mesure dans une fenêtre de mesure, dans lequel la détection de la puissance du signal dans le circuit (13) se fait à l'aide d'un détecteur de puissance (6a, 6b) ;
- détermination (130) d'un type de modulation du signal à partir d'une pluralité de types de modulation sur la base de la puissance détectée et d'une ou plusieurs valeurs de références ou d'un ou plusieurs modèles de référence ;
- configuration de l'unité d'amplification (4) sur la base du type de modulation déterminé ;
- amplification du signal entre un terminal (9) et une antenne (10) avec l'unité d'amplification (4).

2. Procédé selon la revendication 1,
dans lequel les N valeurs de mesure sont des valeurs échantillonnées successivement du signal, et/ou
dans lequel la détection de la puissance du signal avec N valeurs de mesure dans une fenêtre de mesure comprend un échantillonnage du signal dans la fenêtre de mesure, et
dans lequel la fenêtre de mesure est de préférence plus longue que la durée d'un symbole modulé du signal.

3. Procédé selon la revendication 1 ou 2, dans lequel la détermination du type de modulation comprend une comparaison d'une évolution d'amplitude dans le temps de la puissance détectée avec un modèle de référence.

4. Procédé selon l'une quelconque des revendications 1 à 3, dans lequel la détermination du type de modulation comprend :
- la détermination d'une première valeur de puissance et d'une seconde valeur de puissance, dans lequel la première et la seconde valeur de puissance sont respectivement une valeur de puissance différente d'une valeur de puissance maximale Nₘₐₓ, d'une valeur de puissance minimale Nₘᵢₙ et d'une valeur moyenne de puissance des N valeurs de mesure ;
- le calcul d'un paramètre de comparaison de la première et de la seconde valeur de puissance ; et
- la comparaison du paramètre de comparaison avec une ou plusieurs valeurs de seuil.

5. Procédé selon la revendication 4, dans lequel le paramètre de comparaison de la première et de la seconde valeur de puissance comprend une différence ou un quotient de la première et de la seconde valeur de puissance.

6. Procédé selon la revendication 4 ou 5,
dans lequel la comparaison avec les une ou plusieurs valeurs de seuil comprend une comparaison avec une valeur de seuil basse et avec une valeur de seuil haute,
dans lequel de préférence chacun de la pluralité de types de modulation présente une valeur de seuil basse prédéterminée et une valeur de seuil haute prédéterminée, et le type de modulation du signal est déterminé de telle sorte que le paramètre de comparaison est supérieur ou égal à la valeur de seuil basse prédéterminée et inférieur ou égal à la valeur de seuil haute prédéterminée du type de modulation.

7. Procédé selon l'une quelconque des revendications 1 à 6, dans lequel la pluralité de types de modulation comprend au moins un des types de modulation suivants : GMSK, 8-PSK, 16-QAM ou 32-QAM.

8. Procédé selon l'une quelconque des revendications précédentes, dans lequel le procédé comprend en outre :
- la détermination de la plage de fréquence et/ou de l'évolution dans le temps du signal ;
- la limitation de la pluralité de types de modulation sur la base de la plage de fréquence et/ou de l'évolution dans le temps déterminées du signal.

9. Procédé selon l'une quelconque des revendications 4 à 6 ou l'une quelconque des revendications 7 à 8, lorsque celles-ci dépendent de l'une quelconque des revendications 4 à 6, dans lequel le procédé comprend en outre : la configuration de l'unité d'amplification (4) sur la base du paramètre de comparaison déterminé.

10. Procédé selon l'une quelconque des revendications précédentes, dans lequel la configuration de l'unité d'amplification (4) comprend une configuration des un ou plusieurs amplificateurs (1, 2) et/ou comprend une configuration du routage de signaux dans l'unité d'amplification et/ou comprend une configuration d'un dispositif d'atténuation.

11. Procédé selon l'une quelconque des revendications précédentes, dans lequel le procédé comprend en outre :
- la détermination d'une puissance moyenne du signal ;
- l'adaptation des une ou plusieurs valeurs de référence ou des un ou plusieurs modèles de référence sur la base de la puissance moyenne déterminée du signal.

12. Procédé selon l'une quelconque des revendications précédentes, dans lequel le procédé comprend en outre :
- la détermination (602) d'une durée du signal ;
- la configuration (603) de l'unité d'amplification (4) sur la base de la durée déterminée du signal ;
- la réduction (604) de l'amplification de signal générée par le biais des un ou plusieurs amplificateurs (1, 2) lorsque le signal est plus long qu'une durée prédéterminée.

13. Procédé selon la revendication 12, dans lequel, lorsque le signal est envoyé à l'aide d'un mode de transmission à base d'intervalles de temps la période prédéterminée correspond à deux intervalles de temps d'envoi successifs ou plus.

14. Circuit (13) permettant d'amplifier un signal entre un terminal (9) et une antenne (10) comprenant :
- une unité de transmission (11) qui est configurée pour recevoir un signal ;
- un détecteur de puissance (6a, 6b) qui est configuré pour détecter une puissance du signal avec N valeurs de mesure dans une fenêtre de mesure ;
- une unité d'amplification (4) présentant un ou plusieurs amplificateurs (1, 2), disposés dans des branches de signal parallèles, qui est configurée pour amplifier le signal entre le terminal (9) et l'antenne (10) ;
- une unité de commande (7) qui est configurée pour déterminer un type de modulation du signal à partir d'une pluralité de types de modulation sur la base de la puissance détectée et d'une ou plusieurs valeurs de référence ou d'un ou plusieurs modèles de référence et pour configurer l'unité d'amplification (4) sur la base du type de modulation déterminé.

15. Circuit selon la revendication 14 qui est en outre conçu pour réaliser le procédé selon l'une quelconque des revendications 2 à 13.
